Europäisches Patentamt

European Patent Office

Office européen des brevets

(19)

(11) Publication number: **0 173 431**
A1

(12) **EUROPEAN PATENT APPLICATION**

(21) Application number: 85304681.1

(22) Date of filing: 01.07.85

(51) Int. Cl.⁴: **H 01 M 14/00,** H 01 L 31/04, C 03 C 3/32

(30) Priority: 23.07.84 US 633660

(43) Date of publication of application: 05.03.86 Bulletin 86/10

(84) Designated Contracting States: **DE FR GB IT**

(71) Applicant: **Corning Glass Works, Houghton Park, Corning New York 14831 (US)**

(72) Inventor: **Fong, Gerald David, Backer Road, Beaver Dams New York (US)**

(74) Representative: **Smith, Sydney et al, Elkington and Fife High Holborn House 52/54 High Holborn, London WC1V 6SH (GB)**

(54) Photoelectrodes for solar energy conversion.

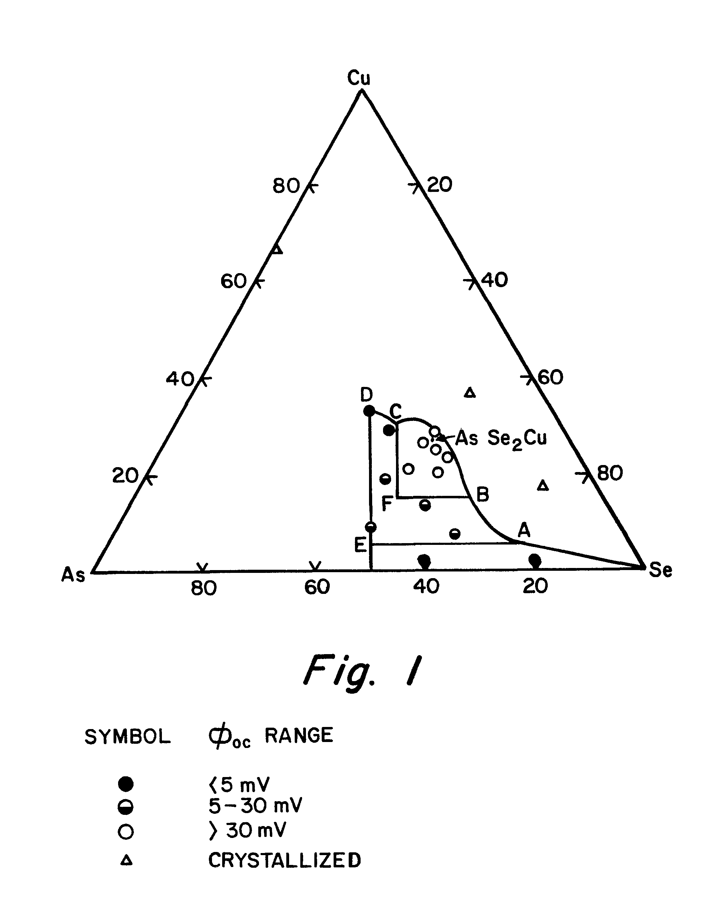

(57) Glasses in the As-Se-Cu field exhibiting properties rendering them eminently suitable for components of photoelectrochemical devices are produced. Elements of photochemical devices composed of such glasses are provided. The glasses consist essentially of compositions within the region ABCDE of FIGURE 1.

| SYMBOL | $\phi_{oc}$ RANGE |
|--------|-------------------|
| ● | $< 5$ mV |
| ◒ | $5 - 30$ mV |
| ○ | $> 30$ mV |
| △ | CRYSTALLIZED |

- 1 -

PHOTOELECTRODES FOR SOLAR ENERGY CONVERSION

The application of semiconductor materials for photoelectrochemical conversions has been studied at least since 1972 when it was first reported that water could be split into hydrogen and oxygen in the presence of illuminated, doped $TiO_2$ crystals [K. Honda and A. Fujishima, Nature, 238, 38 (1972)]. Further research has focussed predominantly on crystalline systems; e.g., c-Si [D. Laser and A. J. Bard, Journal of Physical Chemistry, 80, 459 (1976)], c-GaAs [B. Miller, F. A. Thiel, and A. Heller, Applied Physics Letters, 38, 282 (1981)].

Little investigation has been reported on vitreous systems despite several inherent advantages possessed by glasses, viz., readily adjustable compositions, easy formability, and good strength. It is believed this lack of research has been due at least in part from traditional emphases on the simple, regular structures of crystals. Furthermore, a-Si was discovered to contain high densities of defect states associated with "dangling" bonds [A. E. Owen and W. E. Spear, Physics and Chemistry of Glasses, 17, (5) 174 (1976)]. Those defects were expected to lower photocarrier mobility by trapping, thereby reducing photocurrent density. That expectation has generally been extended to all glass compositions. Finally, doped crystalline semiconductors can conventionally exhibit electrical resistivities below 10 ohm-cm, whereas glasses commonly demonstrate electrical resistivities above $10^8$ ohm-cm.

Yet, the intrinsic advantages in formability, coupled with the absence of grain boundaries, have led to the extensive use of amorphous materials in electronic devices and in the production of high durability substrates. A recognition of those advantages resulted in research being initiated to determine their applicability to solar energy conversion. A cornerstone of the investigation has been an endeavor to exploit physical property-glass composition interdependencies. Hence, it was perceived that multicomponent amorphous semiconductors could offer an adjustable spectrum of physical properties not fundamentally attainable from single element materials. Furthermore, laminates of varying composition, i.e., a graded gap junction, can be perceived which are capable of attaining efficiencies exceeding any value possible for a single gap junction.

## General Outline of the Invention

In conducting that research, I devised the following six basic criteria which a prospective glass candidate for these applications must satisfy:

(a) the composition system must form glasses over a relatively wide range of stoichiometries;

(b) the photoelectrochemical activity observed must be due to the glass composition; not to the presence of crystalline materials;

(c) the glasses must demonstrate open-circuit photopotentials of about 50-500 millivolts under white light, as exemplified by illumination from a 150 watt Xenon lamp;

(d) the glasses must manifest estimated band gaps within the range of about 0.8-2.5 electron volts (eV), with an optimal value being in the vicinity of 1.0 eV;

(e) the glass compositions must resist deterioration upon exposure to high photon fluxes and high voltages; that capability being determined through the use of low dark currents, i.e., about 1-40 microamperes ($\mu$A)/cm$^2$, and by the observation of a lack of visible electrode discoloration and the stability of the output photocurrent over a period of time; and

(f) the glasses must exhibit electrical resistivities lower than about $10^6$ ohm-cm.

An initial survey was undertaken of ternary chalcogenide glasses containing arsenic, selenium or tellurium, and a third element. That class of glasses possesses a number of desirable features. For example, the compositions are low melting and readily vaporizable, thereby making the preparation of thin films relatively easy. The glasses are often semiconducting and frequently display relatively low electrical resistivities. The compositions absorb strongly in the visible range of the radiation spectrum and are commonly resistant to chemical attack over the pH range of 0-13. Very importantly, the non-oxide glasses can permit adjustment of both the conduction and the valence band edge positions with modifications in composition. In contrast, oxide-containing semiconductors have valence edges wich are fixed in value by their oxygen 2p orbitals. And unlike silicon, chalcogenide glasses exhibit no detrimental "dangling bond" gap states.

Therefore, the initial survey had four goals:

(1)  to study a variety of ternary As-Se or Te-X systems to delineate a promising composition field for photoelectrochemical activity, wherein X may be selected from a number of elements;

(2)  to demonstrate that the photoelectrochemical properties of the chosen ternary system can be adjusted through modifications in composition;

(3)  to compare, where possible, the performance of a vitreous and crystalline body of identical composition to determine whether the glass manifests superior properties; and

(4)  to investigate gap state structure and discover the experimental factors which control the density and position of those states.

## Brief Description of the Drawings

FIGURE 1 comprises a ternary composition diagram, in atomic percent of the As-Se-Cu compositions operable in the present invention.

FIGURE 2 pictures the wide differences in $\emptyset_{oc}$ exhibited by glasses within the As-Se-Cu ternary as a function of radiation wavelength utilized.

FIGURE 3 graphically reports the defined structure of the valence band with changes in composition employing ESCA techniques.

FIGURE 4 graphically illustrates open circuit photosignals manifested by the vitreous and crystalline form of $AsSe_2Cu$.

FIGURE 5 records closed circuit photosignals exhibited by the vitreous and crystalline forms of $AsSe_2Cu$.

FIGURE 6 provides a comparison of open circuit photopotentials of amorphous and crystalline $AsSe_2Cu$.

FIGURE 7 presents several curves of photocurrents exhibited at various voltages for several redox species.

FIGURES 8A and 8B illustrate the rectification of metal/As-Se-Cu junctions utilizing current-voltage plots.

FIGURES 9A and 9B comprise Bode plots of a metal/As-Se-Cu junction in terms of applied voltage.

In carrying out that initial survey, the glass compositions were batched in vacuo in pre-dried silica tubes utilizing elements of 99.999% purity as starting materials. Both As and Se were separately pre-treated by heating at about 200°-250°C in vacuo to vaporize off any oxide impurities. The tubes were flame sealed to form ampoules and the ampoules placed into a rocking furnace. The furnace was set into motion, heated to 225°C, maintained at that temperature for one hour, heated to 800°-900°C, and held thereat for 20-24 hours. The furnace motion was stopped, the ampoules removed therefrom, broken, and the molten, silvery masses were quenched in an ice bath. Table I reports compositions so prepared.

The resulting products were generally shiny and silver in appearance. Low resolution X-ray examination detected no evidence of crystallinity. Photoelectrodes were formed from thin flakes ($\sim$0.05-0.15 cm in thickness) with areas of 0.01-0.1 $cm^2$. Ohmic contact was obtained using vacuum deposited gold with silver paint and copper wire being utilized to make electrical contact to the gold.

Open circuit photopotentials ($\emptyset_{oc}$, mV) were measured for several compositions using air-saturated acetonitrile and filtered white light (150 watt Xenon

arc lamp, wavelength $\sim$ 280 nm, except where indicated otherwise). Those values are also recorded in Table I.

Table I lists glass compositions in terms of mole percent, both as calculated from the batch and as chemically analyzed in the final product. An empirical formula based upon chemically-analyzed, elemental ratios is also recited; the first element in each formula being deemed to have a stoichiometric coefficient of unity.

## Table I

| Example | Batch | Analyzed | Formula | $\emptyset_{oc}$, mV |
|---------|-------|----------|---------|-------|
| 1 | 40.1 As | 36.8 As | $AsSe_{0.6}Te_{1.0}$ | $\sim$10 |
|   | 20.0 Se | 21.3 Se | | |
|   | 39.9 Te | 41.9 Te | | |
| 2 | 40.3 As | 26.8 As | $AsTe_{1.8}Cu_{0.9}$ | $\sim$60 |
|   | 40.0 Te | 48.1 Te | | |
|   | 19.7 Cu | 25.1 Cu | | |
| 3 | 24.9 As | 47.3 As | $AsTe_{0.7}Tl_{0.4}$ | 3-50 |
|   | 50.0 Te | 35.0 Te | | |
|   | 25.1 Tl | 17.7 Tl | | |
| 4 | 25.0 Al | Did not form a homogeneous glass | | |
|   | 50.0 Se | | | |
|   | 25.0 Cu | | | |
| 5 | 25.0 Ga | 25.1 Ga | $GaSe_{2.1}Cu_{1.0}$ | |
|   | 50.0 Se | 50.8 Se | Did not form a homo- | |
|   | 25.0 Cu | 24.1 Cu | geneous glass | |

| Example | Batch | Analyzed | Formula | $\emptyset_{oc}$, mV |
|---|---|---|---|---|
| 6 | 25.1 As | 24.8 As | $AsSe_{1.9}Cu_{1.1}$ | 100-600 |
| | 50.1 Se | 47.3 Se | | |
| | 24.8 Cu | 27.9 Cu | | |
| 7 | 45.2 As | 45.1 As | $AsSe_{1.0}Cu_{0.2}$ | 10-20 |
| | 45.5 Se | 45.6 Se | | |
| | 9.3 Cu | 9.3 Cu | | |
| 8 | 12.5 As | 9.3 As | $AsSe_5Cu_5$ | |
| | 50.0 Se | 46.3 Se | Did not form a homo- | |
| | 37.5 Cu | 44.4 Cu | geneous glass | |
| 9 | 32.0 As | 31.9 As | $AsSe_2Cu_{0.2}$ | 2-4* |
| | 62.0 Se | 62.0 Se | | |
| | 6.0 Cu | 6.1 Cu | | |
| 10 | 33.0 As | 33.2 As | $AsSe_{1.2}Cu_{0.82}$ | ∿60* |
| | 40.0 Se | 39.7 Se | | |
| | 27.0 Cu | 27.1 Cu | | |
| 11 | 42.0 As | 41.8 As | $AsSe_{1.2}Cu_{0.2}$ | 2-4* |
| | 50.0 Se | 50.2 Se | | |
| | 8.0 Cu | 8.0 Cu | | |
| 12 | 27.5 As | 26.5 As | $AsSe_2Cu$ | 20-40* |
| | 48.3 Se | 48.3 Se | | |
| | 24.1 Cu | 25.2 Cu | | |

*Measured at a wavelength of 500 μm.

As can be observed from Table I, some of the As-Se-Cu ternaries exhibited unusually large light sensitive photopotentials. That factor and the recognized low and adjustable electrical resistivities of such glass compositions prompted further investigation thereof.

FIGURE 1 graphically depicts the observed variations in $\phi_{oc}$ (expressed as mV) with As-Se-Cu stoichiometry, along with the composition region thereof wherein glasses can be formed. As can be seen, the larger values of $\phi_{oc}$ cluster near the $AsSe_2Cu$ stoichiometry, thereby suggesting its significance as a photoactive site. The triangles represent compositions which crystallized upon cooling rather than forming glasses.

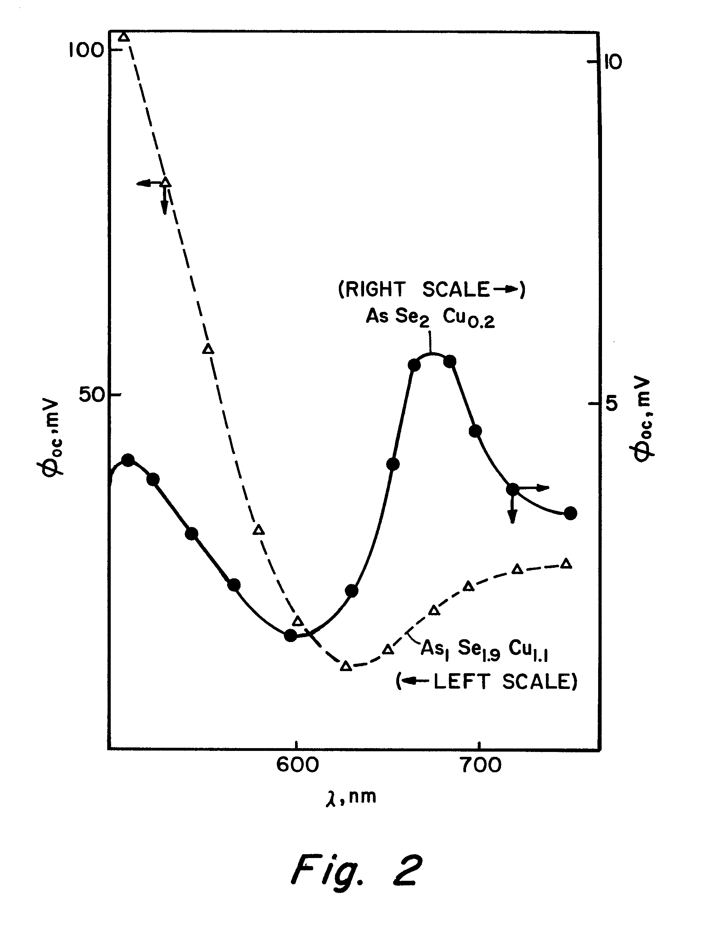

FIGURE 2 graphically illustrates the wide differences in $\phi_{oc}$ demonstrated by glasses within the As-Se-Cu ternary system depending upon the radiation wavelength employed. In like manner to FIGURE 1, FIGURE 2 makes clear that the photoelectrochemical response of the As-Se-Cu system can be varied substantially through changes in composition.

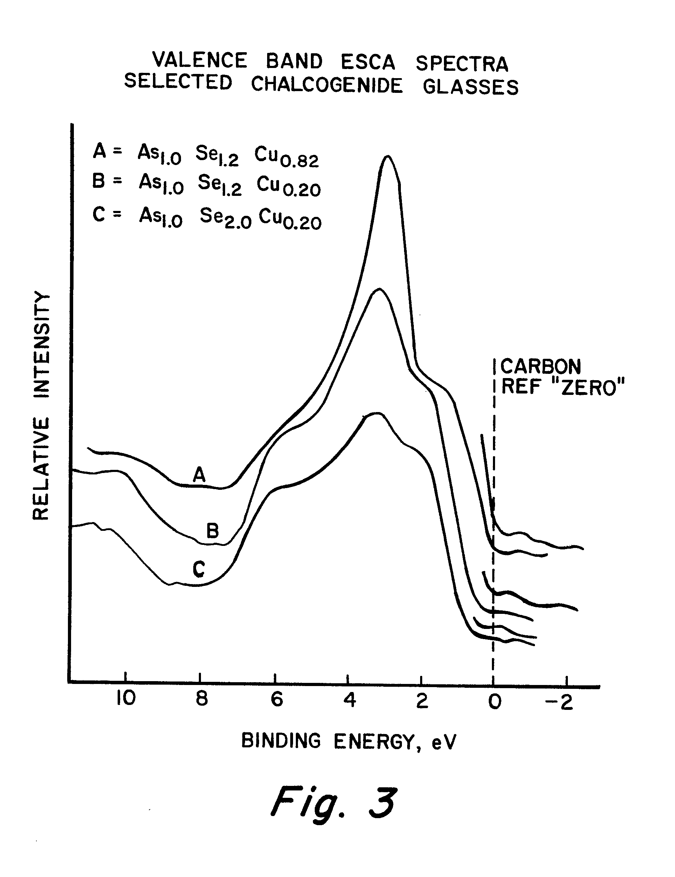

FIGURE 3 reports the defined structure of the valence band with varying compositions, as derived from electron spectroscopy chemical analysis (ESCA). The observed shifts in edge position and electronic density can be correlated directly to changes in stoichiometry. ESCA studies have also provided some evidence suggesting the presence of gap states and their variation with composition. FIGURE 3 commends the inference that there is a direct connection between stoichiometry, electronic band structure, and output photoresponses in the As-Se-Cu system. In any event, the ESCA analyses exhibit the control of properties offered by glass composition.

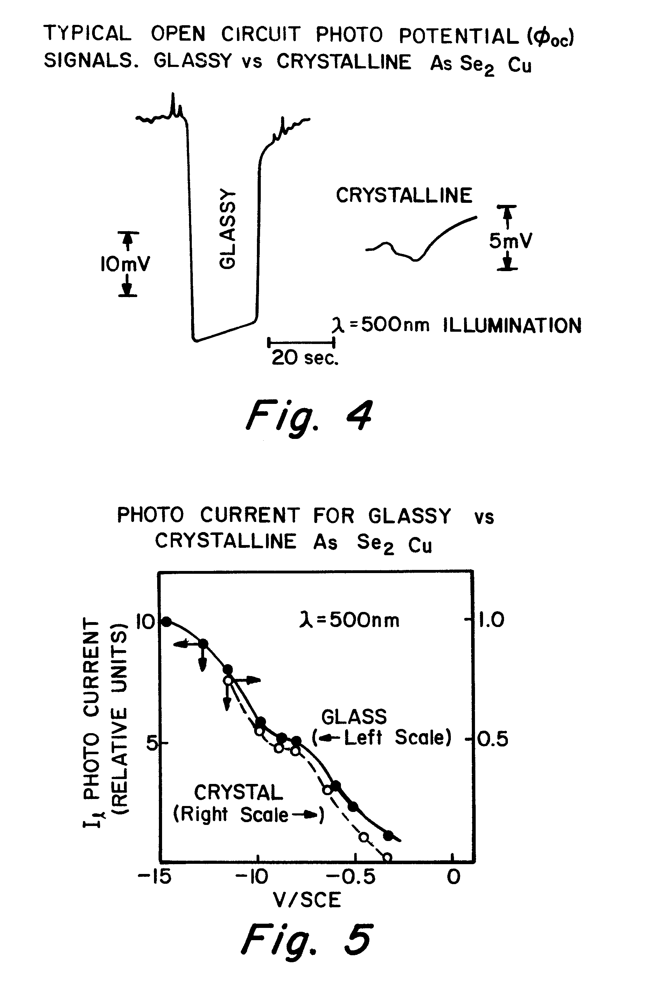

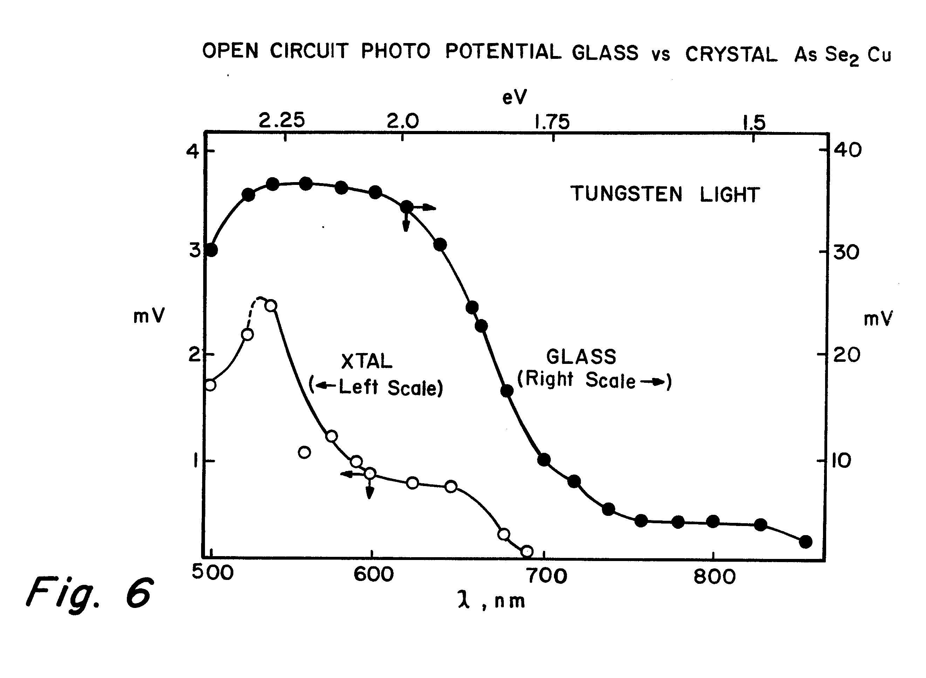

FIGURES 4 and 5 compare the open and closed circuit photosignals demonstrated by the vitreous and

polycrystalline forms of $AsSe_2Cu$. Although the electrical resistivity of the glass is about $10^4$ times greater than the polycrystalline phase, both the $\emptyset_{oc}$ and photocurrent ($I_1$) of the glass are about 10 times greater than the crystalline form. In both FIGURES a relatively weak illumination at a wavelength of 500 nm was utilized. Such enhancement demonstrates that a glassy surface can surpass a crystalline analog in photoconversion efficiency. This effect has been tested only rarely in the past, notably for silicon. In FIGURE 5 the voltage values are reported <u>vis-a-vis</u> a standard calomel electrode (SCE).

The comparison of open circuit photopotentials of the glass $AsSe_2Cu$ with those of the crystal phase in FIGURE 6 exhibits a significant red shift in response for the glass. The same source of illumination employed above in FIGURES 4 and 5 was utilized here also. That shift can be used advantageously in utilizing the solar spectrum in photovoltaic and photoelectrochemical application.

The measurement of $I_1$ vs. V, when an oxidizing or reducing agent is purposefully introduced, provides a basis for estimating the fraction of impinging light energy which is converted into electrical energy. Net conversion occurs if, for a given p-type semiconductor under illumination, reduction of an introduced oxidant commences at a voltage (Vfb) less cathodic (more positive) than at a platinum electrode ($E_{1/2}$). Better conversion corresponds to increasing the difference: $\emptyset_{oc} = Vfb - E_{1/2}$. Better conversion also occurs when $I_1$ is increased for V between Vfb and $E_{1/2}$. $I_1$ at V = $E_{1/2}$ is termed the short circuit photocurrent ($I_{sc}$). An estimation of the useful energy captured by a semiconductor/solution junction can be made via the product of the short circuit photocurrent and the open circuit photopotential, i.e.:

$$P' = I_{sc} \times \emptyset_{oc}$$

By defining P as the light power input, solar energy efficiencies can then be estimated by the expression:

$$E \sim 100(P'/P)$$

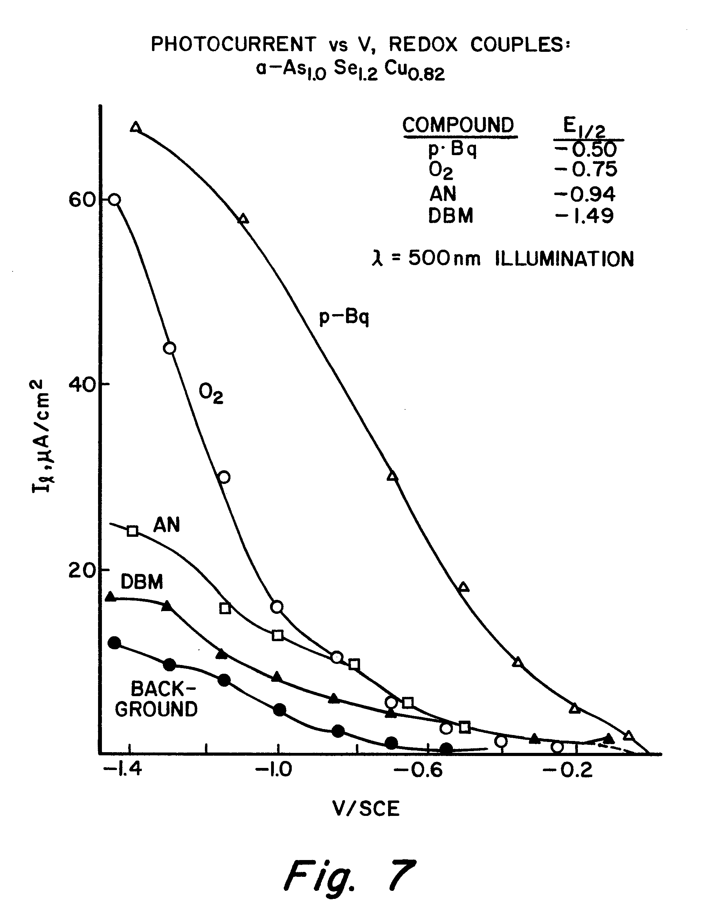

FIGURE 7 presents several plots of $I_1$ versus V with introduced electron acceptors utilizing 500 nm (2.4 eV) light ($\sim < 1mW/cm^2$). That potential comfortably exceeds the energy necessary to excite across the gap of any of the inventive glass. Based upon the foregoing equation, a rough estimate of the conversion efficiency (including a "fill-factor" correction) of the electrode in FIGURE 7 is $\sim 0.5\%$. The trend of the curves indicates that the optimized output for a given glass may be attained through the proper choice of oxidant. Similar measurements using p-Si [(100) Texas Instruments Co.] indicate comparable photocurrents, open circuit potentials, and efficiencies at 500mm. When 1mM p-benzoquinone was employed, for example, $\emptyset \sim 200$ mV and $I_{sc} \sim 1.5 \ \mu A/cm^2$.

FIGURE 7 also illustrates a feature common to the inventive vitreous As-Se-Cu electrodes. As can be observed, $I_1$ evidently goes to zero at a voltage (Vfb) which is independent of the $E_{1/2}$ of the introduced oxidant. For the four redox species examined, viz., p-benzoquinone (p-BQ), oxygen, anthraquinone (AN), and dibenzoylmethane (DBM), the values for $\emptyset_{oc}$ are 0.4, 0.65, 0.85, and 1.4 volts, respectively. Based upon basic "band bending" theory, that behavior would seem to imply an essential absence of surface or bulk defects detrimental to photoelectrochemical performance. Such ideal behavior has been defined in the art as system having "conduction band pinning". In the case of an "unpinned" system, $\emptyset_{oc}$ will be constant. Because the $\emptyset_{oc}$ values of the inventive As-Se-Cu glasses do not appear to be constant, the photoelectrochemical output may be tailored by the choice of oxidant. It must be understood, however, that the behavior reported in FIGURE 7 cannot be deemed to constitute unequivocal evidence of the phenomenon of pinning.

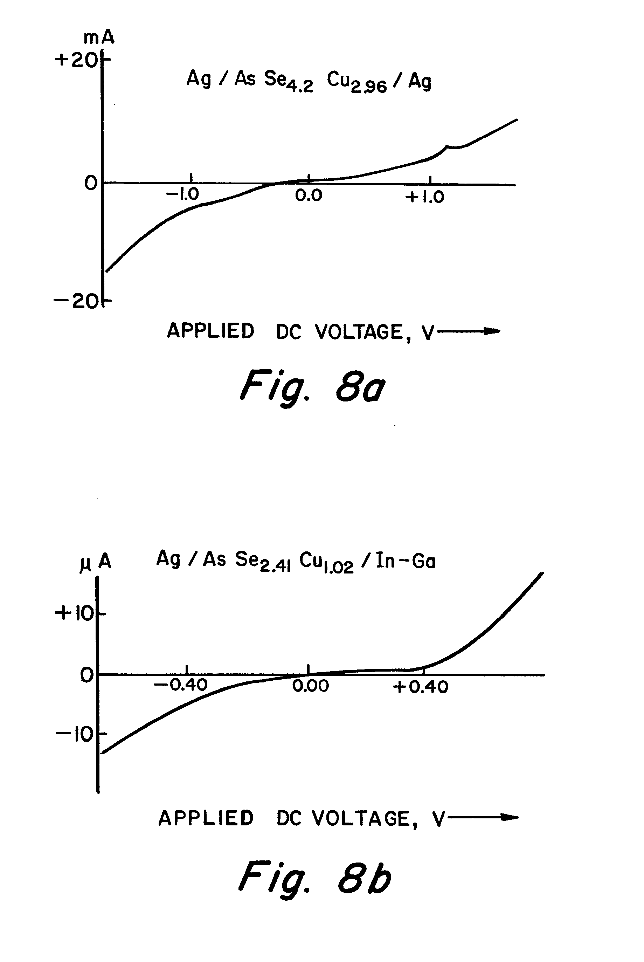

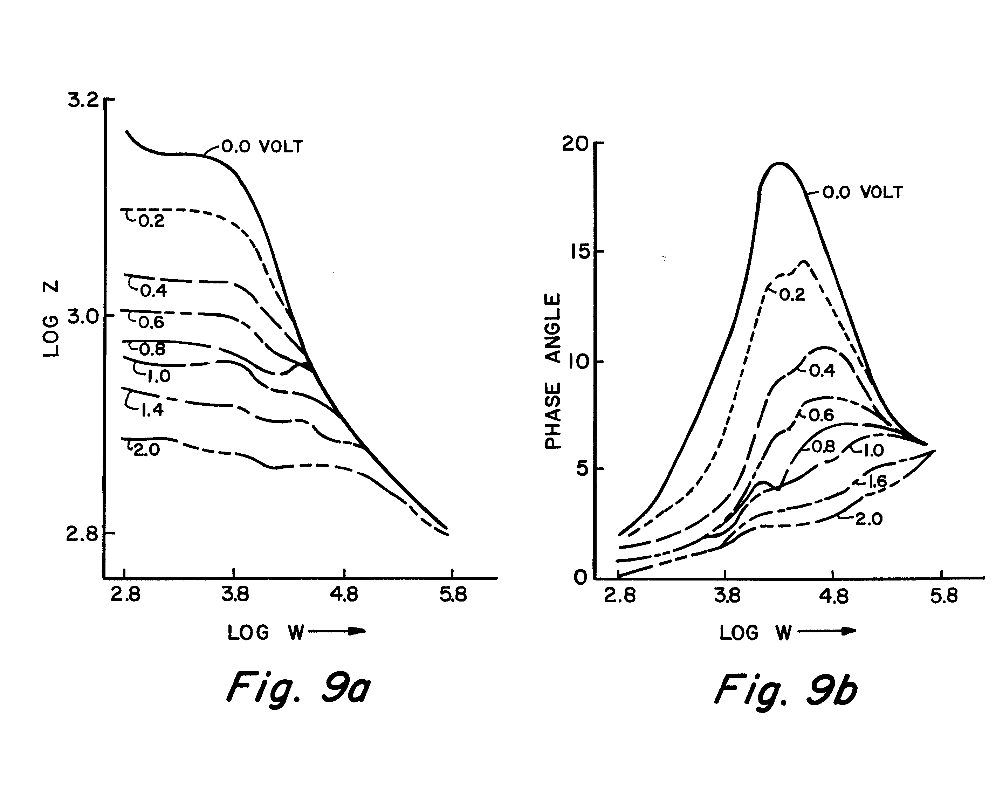

The observed rectification of metal/As-Se-Cu junctions, as exemplified in FIGURES 8 and 9, recommends the application of the inventive glasses for solid state electronic components such as diodes and photodiodes. With either a Ag or Ir-Ga contact, blocking character is apparent from the DC current-voltage plot in FIGURES 8A and 8B.

FIGURE 8A is such a plot for $Ag/AsSe_{4.2}Cu_{2.96}/Ag$ junction wherein current is expressed in terms of milliamperes and the applied DC voltage in terms of volts. FIGURE 8B is a plot for $Ag/AsSe_{2.41}Cu_{1.02}/In$-Ga junctions wherein current is expressed in terms of microamperes and the applied DC voltage in terms of volts.

The presence of at least one capacitive element is confirmed by the phase angle and impedance (Z) variation with AC frequency ($\omega$) evidenced during impedance measurements. Impedance is expressed in terms of ohms and frequency in terms of radians/second. FIGURES 9A and 9B comprise Bode plots for $In$-$Ga/AsSe_{2.4}Cu_{1.02}/In$-Ga junction versus applied voltage.

In contrast, Au exhibits ohmic behavior, i.e., the phase angle is essentially 0° at all frequencies and Z is invariant.

In like manner to the variation of photoelectrochemical behavior exhibited with redox couple, the choice of contacting metal enables the junction character of As-Se-Cu glasses to be adjusted.

Based upon the above results, it has been determined that As-Se-Cu compositions operable in the present invention are encompassed within the general area ABCDE of FIGURE 1, with the preferred compositions filling within the region BCF. In approximate atomic percent, Point A represents about 20% As, 25% Se, and 5% Cu, Point B designates about 25% As, 60% Se, and 15% Cu, Point C signifies about 30% As, 39% Se, and 31% Cu, Point D indicates about 28% As, 37% Se, and 35% Cu, Point E records about 48% As, 47% Se, and 5% Cu, and Point F delineates about 38% As, 47% Se, and 15% Cu.

Chalcogenide glasses containing As, Se, and Cu are not novel per se. For example, U.S. Patent No. 3,772,006 discloses glasses consisting essentially, expressed in terms of atomic percent, of 28-55% As, 30-63% Se, 3-12% Cu, and 2-6% Au. The glasses are asserted to exhibit a memory effect; i.e., the electrical resistivity thereof can be electrically switched from a high resistance state to a low resistance state, and the latter state is maintained in the absence of any bias current after the switching current has been removed. Another example, U.S. Patent No. 3,841,739, describes glasses consisting essentially, expressed in terms of atomic percent, of 25-60% As, 25-60% Se, and 12-40% Cu. The glasses are stated to transmit infrared radiations at 12.8 and 16 microns and up to a transmitting edge of 20 microns.

In summary, the thrust of the instant invention is the application of a specific range of glass compositions within the As-Se-Cu system in photoelectrochemical devices. Those glass compositions provide for solar conversion at a glass/electrolyte interface. The unusual sensitivity of the glass compositions to visible light and the clear tracking of their photoelectrochemical properties with the changes in composition have nowhere been previously recognized.

And, as has been explained above, the facility with which compositions of the inventive glasses can be varied endows them with exceptional capabilities. For example, the glasses can form solid state metal/glass junctions with rectifying properties which, in like manner to the above glass/electrolyte junctions, can be adjusted through composition.

Also, because a continuous range of As-Se-Cu glasses exhibits photoactivity in varying degrees, graded junctions composed of thin laminae of different glass compositions can be prepared which can be perceived as yielding higher conversion efficiencies than single gap junctions.

For example, under typical incident solar radiation, a laminate composed of semiconductors with bandgaps of 1.0 and 1.4 eV can, in principle, attain efficiencies near 40% [J. R. Bolton, Science, 202, 705 (1978)]. A laminate exhibiting bandgaps approximating those values can be fabricated from the compositions $AsSe_2Cu$ and $AsSe_2Cu_{0.25}$. Furthermore, glasses with a fixed Se/As of 2.0 and Cu contents intermediate to the above have effective bandgaps between 1.0 and 1.4 eV. A laminate structure wherein the Cu content is continuously varied in such a composition range can yield efficiencies well in excess of 50%. The maximum theoretical efficiency for a single junction device is only 30%.

0173431

CLAIMS:

1. An element of a photoelectrochemical device composed of a glass exhibiting a bandgap of about 0.8-2.5 eV, an electrical resistivity less than about $10^6$ ohm-cm, and an open-circuit photopotential of about 50-500 millivolts under white light, as exemplified by illumination from a 150 watt Xenon lamp, and consisting essentially of an As-Se-Cu composition within area ABCDE of FIGURE 1.

2. An element according to claim 1 wherein said glass exhibits a bandgap in the vicinity of 1.0 eV.

3. An element according to claim 1 wherein said glass composition lies within area BCF of FIGURE 1.

4. An element of a solid state electronic component composed of a glass consisting essentially of an As-Se-Cu composition within the area ABCDE of FIGURE 1.

5. An element according to claim 4 wherein said glass composition lies within area BCF of FIGURE 1.

Fig. 1

| SYMBOL | $\phi_{oc}$ RANGE |
|---|---|
| ● | $< 5\ mV$ |
| ⊖ | $5 - 30\ mV$ |
| ○ | $> 30\ mV$ |
| △ | CRYSTALLIZED |

Fig. 2

VALENCE BAND ESCA SPECTRA
SELECTED CHALCOGENIDE GLASSES

A = $As_{1.0}$ $Se_{1.2}$ $Cu_{0.82}$
B = $As_{1.0}$ $Se_{1.2}$ $Cu_{0.20}$
C = $As_{1.0}$ $Se_{2.0}$ $Cu_{0.20}$

CARBON REF "ZERO"

RELATIVE INTENSITY

BINDING ENERGY, eV

*Fig. 3*

TYPICAL OPEN CIRCUIT PHOTO POTENTIAL ($\phi_{oc}$)
SIGNALS. GLASSY vs CRYSTALLINE $As\,Se_2\,Cu$

GLASSY

CRYSTALLINE

10mV

5mV

$\lambda = 500nm$ ILLUMINATION

20 sec.

Fig. 4

PHOTO CURRENT FOR GLASSY vs
CRYSTALLINE $As\,Se_2\,Cu$

$\lambda = 500nm$

$I_\lambda$ PHOTO CURRENT (RELATIVE UNITS)

GLASS
($\leftarrow$ Left Scale)

CRYSTAL
(Right Scale $\rightarrow$)

V/SCE

Fig. 5

OPEN CIRCUIT PHOTO POTENTIAL GLASS vs CRYSTAL As Se₂ Cu

Fig. 6

01734 31

PHOTOCURRENT vs V, REDOX COUPLES:
$a-As_{1.0}\ Se_{1.2}\ Cu_{0.82}$

| COMPOUND | $E_{1/2}$ |
|---|---|
| p·Bq | −0.50 |
| $O_2$ | −0.75 |
| AN | −0.94 |
| DBM | −1.49 |

$\lambda$ = 500 nm ILLUMINATION

*Fig. 7*

Ag / As $Se_{4.2}$ $Cu_{2.96}$ / Ag

APPLIED DC VOLTAGE, V ⟶

## Fig. 8a

Ag / As $Se_{2.41}$ $Cu_{1.02}$ / In-Ga

APPLIED DC VOLTAGE, V ⟶

## Fig. 8b

0173431

Fig. 9a

Fig. 9b

0173431

European Patent
Office

EUROPEAN SEARCH REPORT

Application number

EP 85 30 4681

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | US-A-3 841 739 (ASAHARA et al.) * claim 1 * | 1,3-5 | H 01 M 14/00<br>H 01 L 31/04<br>C 03 C 3/32 |
| A | JOURNAL OF THE ELECTROCHEMICAL SOCIETY, vol. 129, no. 7, July 1982, pages 1506-1512; Manchester, US; R. TENNE et al.: "Ternary Chalcogenide-Based Photoelectrochemical Cells" | 1 | |

TECHNICAL FIELDS
SEARCHED (Int. Cl.4)

C 03 C 3/32
H 01 G 9/20
H 01 L 31/00
H 01 M 14/00

The present search report has been drawn up for all claims

| Place of search | Date of completion of the search | Examiner |
|---|---|---|
| BERLIN | 16-10-1985 | GIBBS C.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82